# EUROPEAN PATENT APPLICATION

(11) **EP 4 752 626 A1**
(43) Date of publication of application: **03.06.2026**
(21) Application number: 25218735.6
(22) Date of filing: 26.11.2025
(51) Int. Cl.: G03B 21/14, G03B 21/16

(54) **PROJECTION DEVICE**

(30) Priority: 27.11.2024 CN 202422912977 U
(71) Applicant: Shenzhen Oceanwing Smart Innovations Technology Co., Ltd, Shenzhen, Guangdong (CN)
(72) Inventor: ZENG, Qingjiang, Shenzhen (CN); ZHANG, Xianzeng, Shenzhen (CN); XIE, Yifeng, Shenzhen (CN); CAO, Longguo, Shenzhen (CN); XU, Minfa, Shenzhen (CN)
(74) Representative: Steffens, Adrian

(57) **Abstract**

Disclosed is a projection device including a device housing (3), and a drive unit (1), an optical engine unit (2), a liquid cooling unit (41), and a liquid cooling head (8) coupled to the liquid cooling unit (41) that are disposed within the device housing (3). The liquid cooling unit (41) communicates with the liquid cooling head (8) via a pipe (5), and the liquid cooling head (8) is mounted on the optical engine unit (2) and is in contact with the optical engine unit (2) to dissipate heat from the optical engine unit (2); and the drive unit (1) is configured to drive the optical engine unit (2) to rotate relative to the device housing (3) to adjust a projection angle of the projection device. In the disclosure, the projection device ensures cooling effect on the optical engine unit (2) while separating the liquid cooling unit (41) from the optical engine unit (2) and keeps the device housing (3) and the liquid cooling unit (41) stationary during the adjustment process of the projection angle.

## Description

### Field

The present disclosure relates to the technical field of a projection device, in particular to a projection device.

### Background

A projection device, also known as a projector or a projection machine, is a device that can project images or videos onto a screen. The projection device can be connected to computers, VCDs, DVDs, BDs, game consoles, DVs, and the like through different interfaces to play corresponding video signals. The projection device is widely used in homes, offices, schools, and entertainment venues. The types of the projection device include CRT, LCD, DLP, and the like, which vary in working modes. The projection device can be installed in table front projection, ceiling front projection, table rear projection, ceiling rear projection, and the like. In the related art, the projection device is generally unable to automatically adjust its projection angle. Generally, users are required to use additional devices to manually adjust the projection angle of the entire projection device, and the position of the entire projection device needs to be adjusted to adjust the projection angle, which is difficult and results in a poor user experience.

### Summary

In order to solve the technical problem that the projection angle is unable to be automatically adjusted and the adjustment is difficult, the present disclosure provides a projection device according to claim 1. The dependent claims refer to further embodiments.

According to a first aspect of embodiments of the disclosure, a projection device is provided. The projection device includes a device housing, and a drive unit, an optical engine (unit), a liquid cooling unit/device, and a liquid cooling head coupled to, in particular fitting, the liquid cooling unit that are disposed within the device housing.

The drive unit and the liquid cooling unit are fixedly connected to the device housing, the optical engine unit is rotatably connected to the device housing, the liquid cooling unit communicates with the liquid cooling head through a pipe, preferably a flexible pipe, and the liquid cooling head is mounted on the optical engine unit and is in contact with, in particular abuts, the optical engine unit to dissipate heat from the optical engine unit; and the drive unit is configured to drive and/or control the optical engine unit to rotate relative to the device housing to adjust a projection angle of the projection device.

In an optional example, the projection device includes a rotary shaft that is fixedly connected to the optical engine unit, the drive unit is rotatably connected to the optical engine unit via the rotary shaft, and the drive unit drives the rotary shaft, preferably to lead the optical engine unit to rotate relative to the device housing.

In an optional example, the (flexible) pipe includes a first pipe section, a curved pipe section, and a second pipe section which are connected in sequence, the first pipe section communicates with the liquid cooling unit, the second pipe section communicates with the liquid cooling head, and the curved pipe section is wound around the rotary shaft.

In an optional example, the rotary shaft includes a through channel that extends along an axial direction of the rotary shaft, the (flexible) pipe passes through the through channel of the rotary shaft to connect the liquid cooling head with the liquid cooling unit.

In an optional example, the liquid cooling unit includes a water drain and a cooling fan, the water drain communicates with the liquid cooling head via the (flexible) pipe, and an air outlet of the cooling fan faces the water drain.

In an optional example, the projection device includes a control unit which is disposed and/or mounted above the water drain.

In an optional example, the drive unit includes a drive part and a transmission part, the drive part is fixedly connected to the device housing, and the drive part is connected to the optical engine unit via the transmission part, preferably so that the drive part drives the optical engine unit to rotate relative to the device housing through the transmission part.

In an optional example, the transmission part includes one of the following:
a gear transmission mechanism, a worm transmission mechanism, and a lead screw-nut transmission mechanism.

In an optional example, the drive unit includes a drive motor, the drive motor is fixedly connected to the device housing, the drive motor is connected to the optical engine unit through the output shaft of the drive motor to drive the optical engine unit to rotate relative to the device housing.

In an optional example, the output shaft of the drive motor is connected to a gear transmission mechanism which is connected to the optical engine unit. The drive motor may be configured to drive the optical engine unit to rotate relative to the device housing (3) through the gear transmission mechanism to adjust and/or to complete adjusting the projection angle.

In an optional example, the drive unit is directly connected to the optical engine unit.

In an optional example, the optical engine unit includes a lens housing, the device housing includes a projection notch fitting the lens housing, and the lens housing has an arc surface extending around the rotary shaft on a side away from the rotary shaft of the optical engine unit.

In an optional example, the projection device is configured to determine the presence of an obstacle point in a projection area of the projection device, preferably based on (collected) area information of the projection area. The obstacle point may (negatively) affect a projection effect. If the presence of an obstacle point in the projection area of the projection device is determined, the drive unit may be controlled to drive the optical engine unit to rotate relative to the device housing to adjust the projection angle of the projection device, so that no obstacle point is present in the projection area of the projection device. The area information of the projection area may include a grayscale image of the projection area.

In an optional example, an adjustment range of the projection angle of the projection device is from -10° to +45°.

The projection device may be a projector.

In another example, a projector comprises: a controller; an optical engine; a liquid cooling head; and a liquid cooling device configured to dissipate heat from the optical engine via liquid cooling head, wherein the liquid cooling head is coupled to the liquid cooling device via a pipe, wherein the liquid cooling head is in contact with the optical engine.

In an optional example, the controller is further configured to adjust a projection angle of the projector by controlling the optical engine to move.

In an optional example, the projector further comprises a rotary shaft fixedly connected to the optical engine, wherein the controller is configured to control the rotary shaft to cause the optical engine to move.

In an optional example, the pipe comprises a first pipe section, a curved pipe section, and a second pipe section connected in sequence, the first pipe section communicates with the liquid cooling device, the second pipe section communicates with the liquid cooling head, and the curved pipe section is wound around the rotary shaft.

In an optional example, the rotary shaft comprises a through channel that extends along an axial direction of the rotary shaft, and the pipe passes through the through channel of the rotary shaft to couple the liquid cooling head to the liquid cooling device.

In an optional example, the liquid cooling device comprises a water drain and a fan, the water drain communicates with the liquid cooling head via the pipe, and an air outlet of the fan faces the water drain.

In an optional example, the controller is further configured to: receive information about the projection angle of the projector, and adjust the projection angle of the projector based on the information.

In an optional example, the projector further comprises a magnetic encoder configured to determine the projection angle of the projector.

In an optional example, the controller is further configured to: identify an obstacle in a target projection area, and control, based on the obstacle, the optical engine to move so that the target projection area does not include the obstacle.

In an optional example, the controller is in direct contact with the liquid cooling device.

In another example, a projector comprises: a controller; an optical engine; and a liquid cooling device configured to dissipate heat from the optical engine via liquid cooling head, wherein: the liquid cooling head is in contact with the optical engine, and the controller is configured to: identify an obstacle in a target projection area, and control, based on the obstacle, adjust a projection angle of the projector by controlling the optical engine to move.

The technical solution provided by the embodiments of the disclosure may include the following beneficial effects. In the projection device of the disclosure, the liquid cooling head is mounted on the optical engine unit, and the liquid cooling unit communicates with the liquid cooling head by the (flexible) pipe. The projection device has the drive unit therein. The drive unit can drive the optical engine unit to rotate relative to the device housing, thereby adjusting the projection angle of the projection device and keeping the device housing stationary during the adjustment process of the projection angle to ensure that the overall appearance of the projection device remains stable. Within a movable range of the optical engine unit, graphics projected by the optical engine unit change, so as to better ensure stability of the overall appearance of the projection device and enable convenient adjustment of the projection angle to improve the user experience. In addition, by a flexible connection between the liquid cooling unit and the liquid cooling head, the projection device ensures the cooling effect on the optical engine unit while separating the liquid cooling unit from the optical engine unit. While the optical engine unit rotates relative to the device housing, the liquid cooling unit does not need to rotate, thereby reducing the volume of components that need to rotate, and better achieving the projection device that is compact, has an integrated appearance, and is convenient in adjustment of the projection angle.

It should be understood that both the foregoing general description and the following detailed description are exemplary and explanatory only and cannot limit the disclosure.

### Brief Description of the Drawings

Accompanying drawings, which are incorporated in and constitute a part of this specification, illustrate examples according to the disclosure, which together with the specification serve to explain principles of the disclosure.

In order to more clearly illustrate technical solutions in examples of the present disclosure, drawings that need to be used in description of the examples are briefly introduced below, and it will be apparent in to those of ordinary skill in the art that the drawings in the following description are only some examples of the disclosure, and other drawings can be obtained in accordance with these drawings without inventive work.

One or more examples are illustrated by figures in the corresponding drawings, which does not constitute a limitation of the examples. Elements with the same reference numerals in the drawings represent similar elements, and the drawings do not constitute scale limitation unless otherwise specified.
- FIG. 1: is a diagram illustrating a projection device according to an example;
- FIG. 2: is a diagram illustrating fitting of a drive unit with an optical engine unit according to an example;
- FIG. 3: is a diagram illustrating part of a fitting position of a lens housing and a device housing in a projection device according to an example;
- FIG. 4: is a cross-sectional view of the fitting position of the lens housing and the device housing in the projection device according to the example;
- FIG. 5: is another diagram illustrating part of a fitting position of a lens housing and a device housing in a projection device according to an example;
- FIG. 6: is another cross-sectional view of the fitting position of the lens housing and the device housing in the projection device according to the example;
- FIG. 7: is a diagram illustrating a projection device in a first projection state according to an example;
- FIG. 8: is a diagram illustrating a projection device in a second projection state according to an example;
- FIG. 9: is a diagram illustrating a projection device in a third projection state according to an example; and
- FIG. 10: is a diagram illustrating a transmission principle of a drive unit and an optical engine unit in a projection device according to an example.

### Description of reference signs:

1: drive unit; 11: drive part; 111: drive motor; 12: transmission part; 2: optical engine unit; 21: optical engine; 22: lighting unit; 23: lens housing; 231: arc surface; 3: device housing; 4: cooling unit; 41: liquid cooling unit; 411: water drain; 412: cooling fan; 5: pipe / flexible pipe; 51: first pipe section; 52: curved pipe section; 53: second pipe section; 6: speaker unit; 7: control unit; 8: liquid cooling head; 100: rotary shaft.

### Detailed Description

In order to make objects, technical solutions, and advantages of examples of the disclosure clearer, the technical solutions in the examples of the disclosure will be clearly and fully described in combination with the accompanying drawings in the examples of the present disclosure. Obviously, the examples to be described are part of examples but not all examples of the disclosure. Based on the examples of the disclosure, all other examples obtained by those of ordinary skill in the art without inventive work shall fall within the scope of the disclosure.

Many different examples are disclosed below to realize different structures of the disclosure. In order to simplify the disclosure, components and arrangements of specific examples are described below. Of course, they are only exemplary and are not intended to limit the disclosure. Furthermore, the present disclosure may repeat reference numerals and/or letters in different examples. The repetition is for simplicity and clarity, and in itself does not indicate the relationship between the various examples and/or arrangements discussed. Additionally, the disclosure provides examples of various specific processes and materials, but one of ordinary skill in the art may recognize applicability of other processes and/or use of other materials.

For the convenience of description, spatial relationship terms can be used herein to describe the relative positional relationship or rotation of one element or feature relative to another element or feature as shown in the drawings, such as "inside", "outside", "inner", "outer", "under", "below", "on", "above", "front" and "back". This spatial relationship term is intended to include different orientations of the device in use or operation other than orientations depicted in the drawings. For example, if the device in the drawings has a position turnover, a posture change or a movement state change, these directional indications will change accordingly, for example: Elements described as "under or below other elements or features" will be subsequently oriented as "on or over other elements or features". Thus, the exemplary term "below" may include both orientations of above and below. The device may be otherwise oriented (rotated by 90 degrees or in other directions), and the spatial relationship description used herein are interpreted accordingly.

In order to solve the technical problem of being unable to automatically adjust the projection angle, the present disclosure provides a projection device and a method of adjusting a projection angle. In the projection device disclosed herein, a liquid cooling head is mounted on an optical engine unit, and a liquid cooling unit communicates with the liquid cooling head by a pipe, preferably a flexible pipe. The projection device has a drive unit therein. The drive unit can drive the optical engine unit to rotate relative to a device housing, thereby adjusting the projection angle of the projection device and keeping the device housing stationary during the adjustment process of the projection angle to ensure that the overall appearance of the projection device remains stable. Within a movable range of the optical engine unit, graphics projected by the optical engine unit change, , so as to better ensure stability of the overall appearance of the projection device and enable convenient adjustment of the projection angle to improve the user experience. In addition, by a flexible connection between the liquid cooling unit and the liquid cooling head, the projection device, ensures the cooling effect on the optical engine unit while separating the liquid cooling unit from the optical engine unit. While the optical engine unit rotates relative to the device housing, the liquid cooling unit does not need to rotate, thereby reducing the volume of components that need to rotate, and better achieving the projection device that is compact, has an integrated appearance, and is convenient in adjustment of the projection angle.

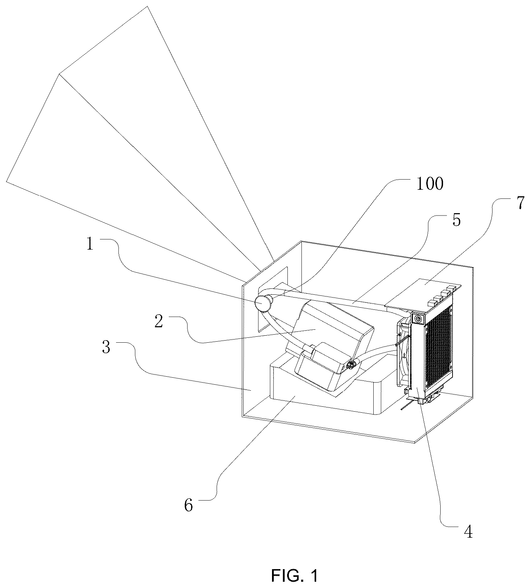

In an example, a projection device and a projection angle adjustment method thereof are provided. Referring to FIGS. 1 to 7, the projection device may include a device housing 3, and a drive unit 1, an optical engine unit 2, a liquid cooling unit 41, and a liquid cooling head 8 disposed within the device housing 3. The drive unit 1 and the liquid cooling unit 41 may be fixedly connected to the device housing 3 to ensure stable mounting of the drive unit 1 and the liquid cooling unit 41.

The optical engine unit 2 is rotatably connected to the device housing 3, and the liquid cooling unit 41 communicates with the liquid cooling head 8 through a (flexible) pipe. The liquid cooling head 8 is mounted on the optical engine unit 2 and abuts the optical engine unit 2 to dissipate heat from the optical engine unit 2. That is, the liquid cooling unit 41 can provide low-temperature refrigerant for the liquid cooling head 8 so that the liquid cooling head 8 dissipates heat from the optical engine unit 2.

The drive unit 1 can be configured to drive the optical engine unit 2 to rotate relative to the device housing 3 to adjust the projection angle of the projection device. That is to say, when the projection angle of the projection device needs to be adjusted, the drive unit 1 can drive the optical engine unit 2 to rotate relative to the device housing 3, thereby completing the adjustment of the projection angle.

It should be noted that an adjustable range of the projection angle of the projection device can be set according to actual needs and is not limited. For example, the adjustable range of the projection angle can be -10° or more and 45° or less.

The optical engine unit 2 can be placed inside the device housing 3 and can protect the optical engine unit 2. It should be noted that, in this example, the placement of the optical engine unit 2 inside the device housing 3 does not limit the optical engine unit 2 to always be completely located in the device housing 3, as long as a main body of the optical engine unit 2 is located inside the device housing 3. For example, in a process of adjusting the projection angle, at some projection angles, a lens of the optical engine unit 2 may be located outside the device housing 3; at other projection angles, the lens of the optical engine unit 2 may be located inside the device housing 3.

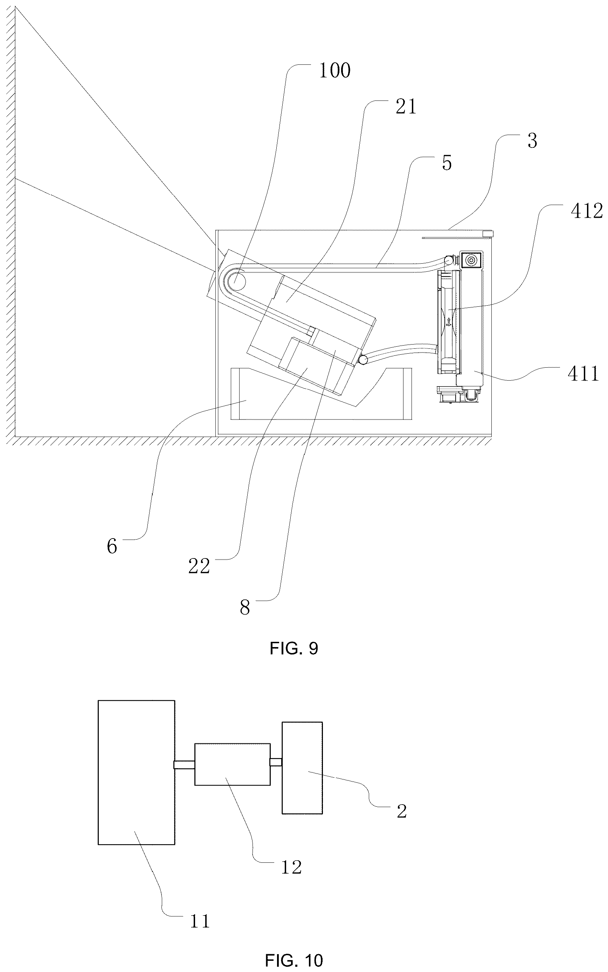

Referring to FIG. 10, the drive unit 1 may include a drive part 11 and a transmission part 12. The drive part 11 is connected to the optical engine unit 2 via the transmission part 12 so that the drive part 11 drives the optical engine unit 2 to rotate relative to the device housing 3 through the transmission part 12.

In some examples (not illustrated), referring to FIG. 10, the drive part 11 may include a drive motor and the transmission part 12 may include a gear transmission mechanism. The drive motor can be fixed to the device housing via a motor bracket to achieve a fixed connection between the drive motor and the device housing. An output shaft of the drive motor can be connected to the gear transmission mechanism, and the gear transmission mechanism can be connected to the optical engine unit. In this way, the drive motor can drive the optical engine unit to rotate relative to the device housing through the gear transmission mechanism, thereby adjusting the projection angle.

It should be noted that, in addition to the drive motor, the drive part 11 may include other devices that can provide a power source, which is not limited. In addition to the gear transmission mechanism, the transmission part 12 may include other transmission mechanisms that can implement the rotation of the optical engine unit relative to the device housing. For example, the transmission part 12 may include a worm transmission structure composed of a worm and a worm wheel, or may include a lead screw-nut transmission mechanism composed of a lead screw and a nut, which is not limited.

In addition to leading the transmission part 12 by the drive part 11 to drive the optical engine unit 2 to rotate relative to the device housing 3, the drive unit 1 can also be directly connected to the optical engine unit 2 to directly drive the optical engine unit 2 to rotate relative to the device housing 3.

The projection device may include a rotary shaft 100 that is fixedly connected to the optical engine unit 2, and the drive unit 1 is rotatably connected to the optical engine unit 2 via the rotary shaft 100. The drive unit 1 drives the rotary shaft 100 to lead the optical engine unit 2 to rotate relative to the device housing 3. It should be noted that the rotary shaft 100 may be a solid structure or a hollow structure, which is not limited herein.

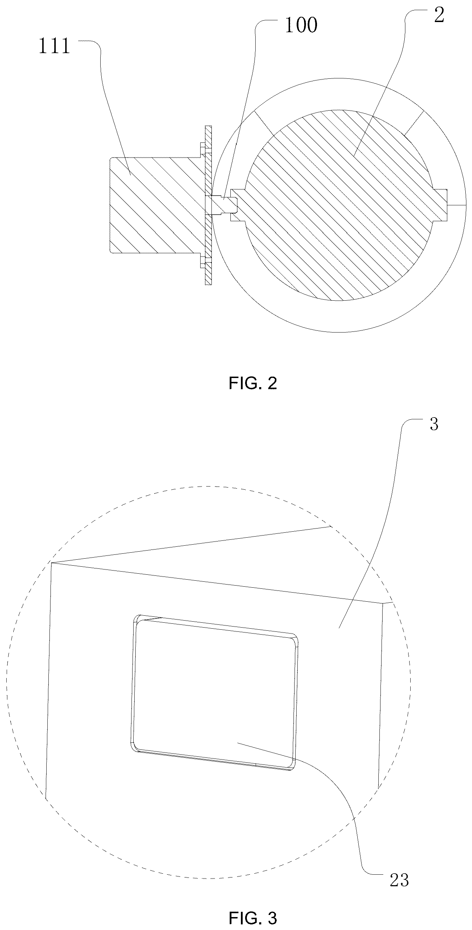

Referring to FIGS. 1 and 2, when the drive unit 1 includes a drive motor 111, the rotary shaft 100 can be an output shaft of the drive motor 111 or a shaft separately provided on the optical engine unit 2, which is not limited. When the rotary shaft 100 is the output shaft of the drive motor 111, the drive motor 111 can be directly connected to the optical engine unit 2 via the output shaft, thereby driving the optical engine unit 2 to rotate relative to the device housing 3. When the rotary shaft 100 is not the output shaft of the drive motor 111, the output shaft of the drive motor 111 can be connected to the rotary shaft 100 through a gear transmission mechanism, a worm transmission mechanism, a lead screw-nut transmission mechanism, or the like, thereby driving the optical engine unit 2 to rotate relative to the device housing.

In some examples, referring to FIGS. 1 and 2, the drive unit 1 may include the drive motor 111, and the output shaft of the drive motor 111 may be fixedly connected to the optical engine unit 2. The drive motor 111 drives the optical engine unit 2 to rotate relative to the device housing 3 via the output shaft. That is, when the projection angle of the projection device needs to be adjusted, the drive motor 111 can be started. After started, the drive motor 111 can drive the optical engine unit 2 to rotate relative to the device housing 3 via the output shaft, thereby adjusting the projection angle.

It should be noted that, in addition to the above method, the rotation of the optical engine unit 2 relative to the device housing 3 can be implemented through other methods, which is not limited herein.

In this example, since the liquid cooling unit 41 is connected to the liquid cooling head 8 via a (flexible) pipe 5, the liquid cooling unit 41 can be separated from the optical engine unit. When the liquid cooling head 8 rotates relative to the device housing 3 along with the optical engine unit 2, the liquid cooling unit 41 does not need to rotate. Therefore, the weight and the volume of a rotating module are reduced, making the drive unit 1 more power-saving and reducing power consumption of the entire projection device. Accordingly, a projection device that is compact, has an integrated appearance and is convenient to adjust a projection angle can be better achieved.

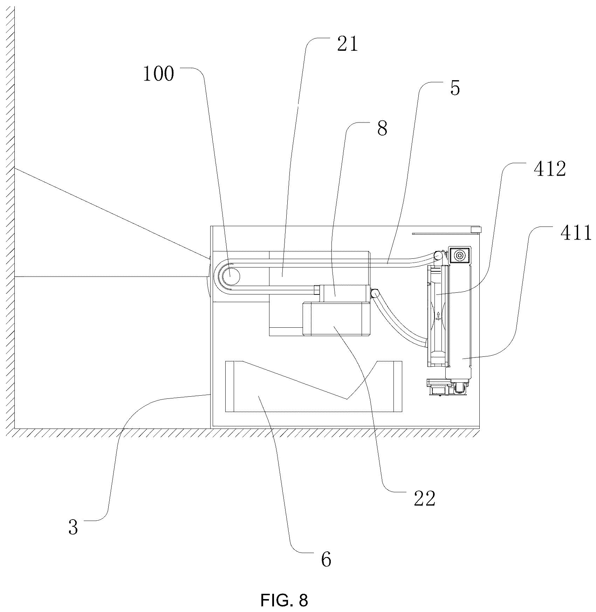

Referring to FIGS. 1 and 7 to 9, the optical engine unit 2 may include an optical engine 21. The liquid cooling head 8 fits the optical engine 21 to dissipate heat from the optical engine 21. The liquid cooling head 8 introduces a refrigerant to the liquid cooling unit 41 via the flexible pipe 5. Moreover, the liquid cooling head 8 is flexibly connected to the liquid cooling unit 41 via the flexible pipe 5. When the optical engine unit 2 rotates relative to the device housing 3, the flexible pipe 5 can better ensure a smooth flow of the refrigerant between the liquid cooling head 8 and the liquid cooling unit 41, thereby better ensuring the cooling effect of the liquid cooling unit 41 on the optical engine unit 2.

It should be noted that, in this example, cooling water or other refrigerants can be used to dissipate heat from the optical engine 21 to cool the optical engine 21, which is not limited herein.

The liquid cooling unit 41 may include a water drain 411 and a cooling fan 412. The water drain 411 can communicate with the liquid cooling head 8 via the flexible pipe 5. An air outlet of the cooling fan 412 can face the water drain 411 to cool the water drain 411. In addition, the projection device may further include a control unit 7 (PCBA) which can be mounted above the water drain 411. Thus, the water drain 411 can dissipate heat from the control unit 7 to a certain extent, thereby better ensuring the performance of the control unit 7.

In some examples, the flexible pipe 5 may include a first pipe section 51, a curved pipe section 52, and a second pipe section 53 which are connected in sequence. The first pipe section 51 communicates with the liquid cooling unit 41, the second pipe section 53 communicates with the liquid cooling head 8, and the curved pipe section 52 is wound around the rotary shaft 100. In other words, the flexible pipe 5 between the liquid cooling head 8 and the liquid cooling unit 41 can bypass the rotary shaft 100 to achieve connection and communication between the liquid cooling head 8 and the liquid cooling unit 41. With such arrangement, when the liquid cooling head 8 rotates relative to the device housing 3 along with the optical engine unit 2, mutual influence between the rotary shaft 100 and the flexible pipe 5 can be reduced, thereby better ensuring smooth rotation. It should be noted that the flexible pipe 5 may include a liquid return pipe and a liquid inlet pipe. In this example, the liquid return pipe or the liquid inlet pipe bypasses the rotary shaft 100, which is not limited herein.

In other examples, when being a hollow structure, the rotary shaft 100 may include a through channel that extends along an axial direction of the rotary shaft 100. The flexible pipe 5 between the liquid cooling head 8 and the liquid cooling unit 41 can pass through the rotary shaft 100 to connect the liquid cooling head 8 with the liquid cooling unit 41, so as to better avoid the mutual influence between the flexible pipe 5 and the rotary shaft 100, thereby better avoiding the flexible pipe 5 from affecting the rotation of the optical engine unit 2 relative to the device housing 3. It should be noted that the flexible pipe 5 may include a liquid return pipe and a liquid inlet pipe. In this example, the liquid return pipe or the liquid inlet pipe may pass through the rotary shaft 100, which is not limited herein.

Referring to FIGS. 1 to 6, the optical engine unit 2 may include a lens housing 23, and the device housing 3 may include a projection notch fitting the lens housing 23. The lens housing 23 can have an arc surface 231 extending around the rotary shaft 100 on a side away from the rotary shaft 100 of the optical engine unit 2. It should be noted that when the optical engine unit 2 rotates relative to the device housing 3, the optical engine unit 2 rotates around the rotary shaft 100. For example, when the output shaft of the drive motor 111 is fixedly connected to the optical engine unit 2, the output shaft and the rotary shaft 100 of the optical engine unit 2 are located at the same position.

Since the lens housing 23 is provided with the arc surface 231 extending around the rotary shaft 100, when the optical engine unit 2 rotates relative to the device housing 3, a distance between the lens housing 23 and an edge of the projection notch on the device housing 3 can maintain consistent and can be set to a small distance to ensure aesthetic appearance of the projection device.

In some examples, referring to FIGS. 1 to 7, the optical engine unit 2 of the projection device may include the optical engine 21, the liquid cooling head 8, a lighting unit 22, and the lens housing 23 that are fixedly connected with each other. The drive unit 1 of the projection device may include the drive motor 111. The output shaft of the drive motor 111 can be fixedly connected to the optical engine 21 of the optical engine unit 2. The liquid cooling unit 41 of the projection device may include the water drain 411 and the cooling fan 412. The water drain 411 communicates with the liquid cooling head 8 through the flexible pipe 5, achieving a flexible connection between the liquid cooling unit 41 and the optical engine unit 2. The control unit 7 of the projection device can be disposed above the water drain 411 so that the water drain 411 can cool the control unit 7.

In this example, the liquid cooling unit 41 is separated from the optical engine unit 2 through the flexible connection, and heat dissipation by water cooling is only exemplified. Heat of the lighting unit 22 in the optical engine unit 2 is brought by the liquid cooling head 8 to the water drain 411 via the flexible pipe 5, and then is dissipated by the cooling fan 412, thereby reducing the volume of the optical engine unit 2. It should be noted that the flexible connection method of dissipating heat from the optical engine unit 2 only exemplifies the method of the flexible pipe 5 in this example, but is not limited to this flexible connection method, and may also include other methods, which is not limited herein. For example, air ducts can be used to dissipate heat. As another example, thermoelectric cooler can be used to transfer heat to nonrotating components.

In this example, when the projection angle needs to be adjusted, a desired target projection angle can be set first. Configuration information can be set in the projection device. The configuration information can include one-to-one correspondence of multiple projection angles with multiple rotation angles. After the target projection angle is determined, the rotation angle corresponding to the target projection angle in the configuration information can be determined as a target rotation angle. Then, the drive motor 111 is started. After that, the optical engine unit 2 can be driven by the output shaft to rotate relative to the device housing 3. The position of the rotary shaft 100 corresponds to the position of the output shaft.

While drive motor 111 drives the optical engine unit 2 to rotate, the rotation angle of the optical engine unit 2 can be identified by a magnetic encoder. When it is determined that the desired target rotation angle is reached, the drive motor 111 is turned off so that the projection device reaches the desired projection angle. Since the optical engine unit 2 and the liquid cooling unit 41 are flexibly connected through the flexible pipe 5, when the projection angle needs to be adjusted, only the optical engine unit 2 is driven to rotate, and the flexible pipe 5 follows the rotation of the optical engine unit 2 to make corresponding movement without driving the liquid cooling unit 41 to rotate. That is, in the projection device, the projection angle is adjusted by taking the optical engine unit 2 as the drive unit 1 without affecting the normal use of the entire projection device.

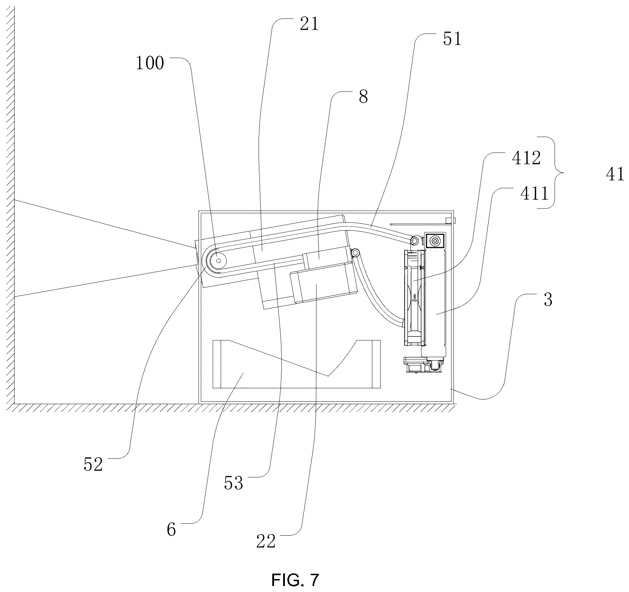

It should be noted that the projection angle of the projection device can range from -45° to +90°. However, the larger the projection angle, the larger a rotation space required by the optical engine unit 2, the larger a space occupied by the entire projection device, and the larger volume the projection device. Therefore, an appropriate projection angle range can be selected by overall considering the requirement for the projection angle and the size of the projection device. For example, the projection angle can range from -10° to +45°, which can meet most household scenarios. Referring to FIGS. 7 to 9, the projection angle corresponding to a first projection state is -10°, the projection angle corresponding to a second projection state is 0°, and the projection angle corresponding to a third projection state is +45°.

In addition, the projection device may also include a speaker unit 6. The speaker unit 6, most part of the optical engine unit 2, the liquid cooling unit 41, the control unit 7, and the like are all wrapped by the device housing 3, thereby achieving the projection device that is compact and has an integrated appearance. Furthermore, the projection device can conveniently adjust the projection angle.

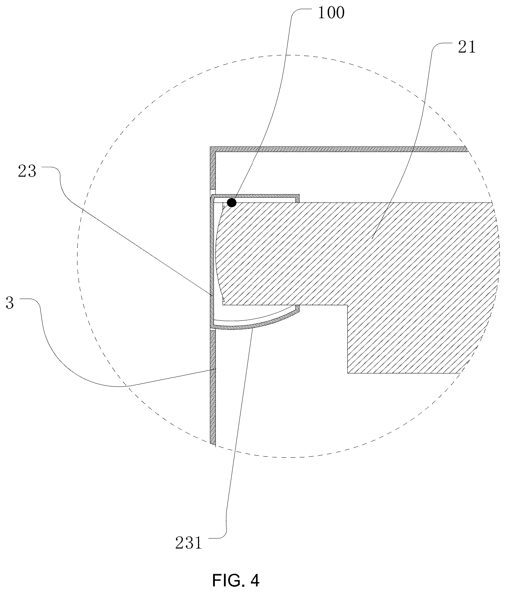

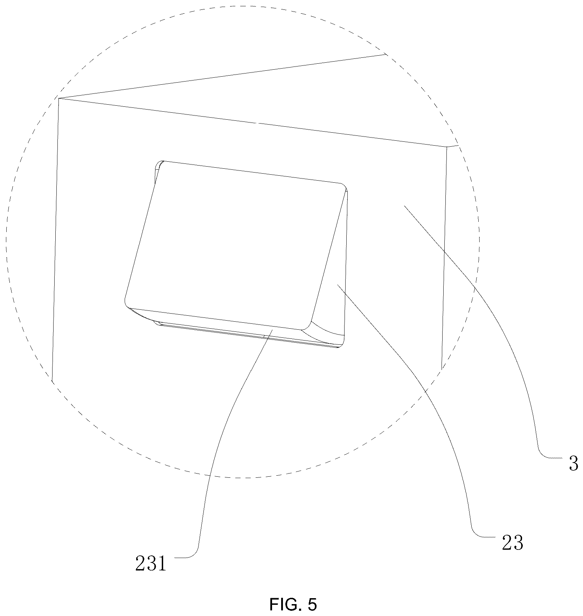

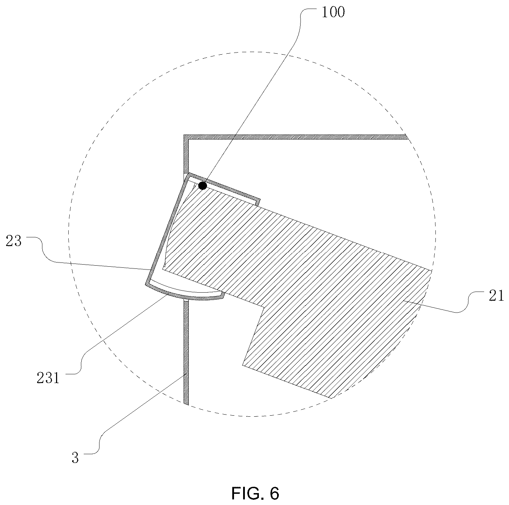

In this example, the rotary shaft 100 of the optical engine unit 2 can be designed to be located above and in front of the lens of the optical engine unit 2, and the arc surface 231 can be provided on a side of the lens housing 23 away from the rotary shaft 100. Referring to FIGS. 5 and 6, the arc surface 231 is centered on the rotary shaft 100. In this way, it can be ensured that during the rotation of the optical engine unit 2, a gap between the lens housing 23 and the device housing is small and uniform and the system has an aesthetic appearance. FIGS. 3 to 6 are diagrams of appearances of the optical engine unit 2 before rotation (as illustrated in FIGS. 3 and 4) and after rotation (as illustrated in FIGS. 5 and 6).

In this example, when it is determined that there is an obstacle point in a projection area of the projection device, the drive unit 1 is controlled to drive the optical engine unit 2 to rotate relative to the device housing 3 to adjust the projection angle of the projection device, so that there is no obstacle point in the projection area of the projection device.

The obstacle point refers to an obstacle point that affects a projection effect. For example, in order to achieve a better projection effect, the projection area of the projection device and/or the projector can be a flat surface. When there is a non-coplanar area in the projection area, the image projected by the projection device is uneven, affecting the user experience. Therefore, the non-coplanar area can be taken as the obstacle point, such as wall space, a ceiling, or a wall corner.

When the projection device determines that there is an obstacle point in a preset area based on collected area information of the projection area, it means that the area where the obstacle point is located is not suitable as the projection area. Therefore, the drive unit 1 can be controlled to drive the optical engine unit 2 to rotate relative to the device housing 3 to adjust the projection angle of the projection device so that there is no obstacle point in the projection area of the projection device.

In some examples, the area information of the projection area may include a grayscale image of the projection area. Based on this, when the projection device identifies an area with an average brightness significantly different from other areas, it can be determined that there is an obstacle point in the preset area.

In some examples, the area information of the projection area may include three-dimensional coordinates of the projection area. Based on this, when the projection device determines that there are non-coplanar points in the three-dimensional coordinates of the projection area, the projection device can acquire the number of the non-coplanar points. Subsequently, it is determined whether the number of points is greater than a preset point number threshold. When it is determined that the number of points is greater than the point number threshold, it is determined that there is an obstacle point in the projection area of the projection device.

During the rotation of the optical engine unit 2 relative to the device housing 3, the area information of the projection area of the projection device can be collected in real time, and it can be determined whether there is an obstacle point in the current projection area. If there is still an obstacle point, the rotation continues; if there is no longer an obstacle point, the rotation can be stopped, completing the adjustment of the projection angle.

In the projection device, the projection angle of the projection device is adjusted by rotation of the optical engine unit 2, and the optical engine unit 2 is disposed in the device housing 3 to achieve an integrated projection device. Further, in the projection device, the liquid cooling unit 41 is separated from the optical engine unit 2 through a flexible connection, thereby compressing the space required for the rotation of the optical engine unit 2 and reducing the size of the entire projection device, which results in the projection device that is compact and has an integrated appearance, making it more convenient to adjust the projection angle. Moreover, since the weight of the rotating optical engine unit 2 is smaller, power consumption of the projection device is lower, thereby improving the energy-saving effect.

It should be understood that the terms used herein are only for the purpose of describing specific examples and are not intended to be limiting. Unless the context clearly indicates otherwise, the singular forms "a", "an" and "the" as used herein can also mean including plural forms. The terms "include", "contain", "comprise" and "have" are inclusive and thus indicate the presence of features, steps, operations, elements and/or components described, but do not exclude the presence or addition of one or more other features, steps, operations, elements, components, and/or combinations thereof. The method steps, procedures, and operations described herein are not interpreted as necessarily requiring them to be executed in the specific order described, unless the execution order is explicitly indicated. It should also be understood that additional or alternative steps may be used.

Although a plurality of elements, components, regions, layers and/or sections can be described herein with the terms first, second, third, and the like, they should not be limited by these terms. These terms may be only used to distinguish one element, component, region, layer or section from another ones. Terms such as "first" and "second" and other numerical terms do not imply sequence or order when used herein unless clearly indicated in the context. Accordingly, the first element, component, region, layer or section discussed below may be referred to as a second element, component, region, layer or section without departing from teachings of the examples.

The foregoing description is only the description of examples of the disclosure to enable a person skilled in the art to understand or implement the disclosure. Various modifications to these examples will be apparent to a person skilled in the art, and general principles defined herein may be implemented in other examples without departing from the scope of the disclosure. Thus, the disclosure is not limited to the examples shown herein but conforms to the widest scope consistent with the principles and novel characteristics applied herein.

## Claims

1. A projection device, comprising a device housing (3), and a drive unit (1), an optical engine unit (2), a liquid cooling unit (41), and a liquid cooling head (8) coupled to the liquid cooling unit (41) that are disposed within the device housing (3), wherein:
- the drive unit (1) and the liquid cooling unit (41) are fixedly connected to the device housing (3), the optical engine unit (2) is rotatably connected to the device housing (3), the liquid cooling unit (41) communicates with the liquid cooling head (8) via a pipe (5), and the liquid cooling head (8) is mounted on the optical engine unit (2) and is in contact with the optical engine unit (2) to dissipate heat from the optical engine unit (2); and
- the drive unit (1) is configured to drive the optical engine unit (2) to rotate relative to the device housing (3) to adjust a projection angle of the projection device.

2. The projection device of claim 1, comprising a rotary shaft (100) that is fixedly connected to the optical engine unit (2), wherein the drive unit (1) is rotatably connected to the optical engine unit (2) via the rotary shaft (100), and the drive unit (1) drives the rotary shaft (100) to lead the optical engine unit (2) to rotate relative to the device housing (3).

3. The projection device of claim 2, wherein the pipe (5) comprises a first pipe section (51), a curved pipe section (52), and a second pipe section (53) which are connected in sequence, the first pipe section communicates with the liquid cooling unit (41), the second pipe section communicates with the liquid cooling head (8), and the curved pipe section (52) is wound around the rotary shaft (100).

4. The projection device of claim 2 or 3, wherein the rotary shaft (100) comprises a through channel that extends along an axial direction of the rotary shaft (100), the pipe passes through the through channel of the rotary shaft (100) to connect the liquid cooling head (8) with the liquid cooling unit (41).

5. The projection device of any one of the preceding claims, wherein the liquid cooling unit (41) comprises a water drain (411) and a cooling fan (412), the water drain communicates with the liquid cooling head (8) via the pipe (5), and an air outlet of the cooling fan (412) faces the water drain (411).

6. The projection device of claim 5, further comprising a control unit (7) which is disposed above the water drain (411).

7. The projection device of any one of the preceding claims, wherein the drive unit (1) comprises a drive part (11) and a transmission part (12), the drive part (11) is fixedly connected to the device housing (3), and the drive part (11) is connected to the optical engine unit (2) via the transmission part (12), so that the drive part (11) drives the optical engine unit (2) to rotate relative to the device housing (3) through the transmission part (12).

8. The projection device of claim 7, wherein the transmission part (12) comprises one of the following:
- a gear transmission mechanism, a worm transmission mechanism, and a lead screw-nut transmission mechanism.

9. The projection device of any one of the preceding claims, wherein the drive unit (1) comprises a drive motor (111), the drive motor (111) is fixedly connected to the device housing (3), the drive motor (111) is connected to the optical engine unit (2) through an output shaft of the drive motor (111) to drive the optical engine unit (2) to rotate relative to the device housing (3).

10. The projection device of claim 9, wherein the output shaft of the drive motor (111) is connected to a gear transmission mechanism which is connected to the optical engine unit (2).

11. The projection device of claim 10, wherein the drive motor (111) is configured to drive the optical engine unit (2) to rotate relative to the device housing (3) through the gear transmission mechanism to adjust the projection angle.

12. The projection device of any one of claims 1 to 8, wherein the drive unit (1) is directly connected to the optical engine unit (2).

13. The projection device of any one of the preceding claims, wherein the optical engine unit (2) comprises a lens housing (23), the device housing (3) comprises a projection notch fitting the lens housing (23), and the lens housing (23) has an arc surface (231) extending around the rotary shaft (100) on a side away from the rotary shaft (100) of the optical engine unit (2).

14. The projection device of any one of the preceding claims, wherein the projection device is configured to determine the presence of an obstacle point in a projection area of the projection device based on collected area information of the projection area.

15. The projection device of any one of the preceding claims, wherein an adjustment range of the projection angle of the projection device is from -10° to +45°.
